# EUROPÄISCHE PATENTANMELDUNG

(11) **EP 2 592 357 A2**
(43) Veröffentlichungstag der Anmeldung: **15.05.2013**
(21) Anmeldenummer: 12190545.9
(22) Anmeldetag: 30.10.2012
(51) Int. Cl.: F24C 15/16

(54) **Garsystem**

(30) Priorität: 08.11.2011 ES 201131795
(71) Anmelder: BSH Bosch und Siemens Hausgeräte GmbH, 81739 München (DE)
(72) Erfinder: Berr, Andreas, 82152 Krailling (DE); Bueno Martinez, Cristina, 50002 Zaragoza (ES); Clemente Sánchez, Ana, 50005 Zaragoza (ES); Esteras Duce, Ignacio, 50010 Zaragoza (ES); Galindo Perez, Juan Jose, 50007 Zaragoza (ES); Hegendörfer, Michael, 82194 Gröbenzell (DE); Jorquera Cocera, Jose Manuel, 50002 Zaragoza (ES); Ruiz Núñez, Beatriz, 50004 Zaragoza (ES)

(57) **Zusammenfassung**

Die Erfindung geht aus von einem Garsystem mit einer Garmuffel (10a-d) und zumindest einem ersten Gargutträger (12a-d) zur wenigstens im Wesentlichen horizontalen und unmittelbaren Halterung an zumindest einer Gargutträgerhaltevorrichtung (14a-d).

Um ein gattungsgemäßes Garsystem mit einer vorteilhaft hohen Bedienflexibilität bereitzustellen, wird vorgeschlagen, dass eine Tiefenerstreckung (16a-d) des ersten Gargutträgers (12a-d) in wenigstens einem betriebsbereiten Zustand höchstens 80 % einer Tiefe (18a-d) der Garmuffel (10a-d) beträgt.

## Beschreibung

Die Erfindung geht aus von einem Garsystem nach dem Oberbegriff des Anspruchs 1.

Aus dem Stand der Technik ist bekannt, Gargutträger, beispielsweise in Form von Garblechen oder Garrosten, zum Tragen von Gargut in einer Garmuffel einzusetzen. Die Garträger werden dabei horizontal und unmittelbar an einer Gargutträgerhaltevorrichtung gehalten, wobei beispielsweise in einer Seitenwand der Garmuffel angeformte Halteleisten, auf die Seitenwand der Garmuffel aufgesetzte Halteleisten und Teleskopauszüge als Gargutträgerhaltevorrichtungen zum Einsatz kommen. Eine Tiefenerstreckung der Gargutträger entspricht dabei im Wesentlichen einer Tiefe der Garmuffel.

Die Aufgabe der Erfindung besteht insbesondere darin, ein gattungsgemäßes Garsystem mit einer vorteilhaft hohen Bedienflexibilität bereitzustellen. Die Aufgabe wird erfindungsgemäß durch die kennzeichnenden Merkmale des Patentanspruchs 1 und des Verfahrensanspruchs 10 gelöst, während vorteilhafte Ausgestaltungen und Weiterbildungen der Erfindung den Unteransprüchen entnommen werden können.

Die Erfindung geht aus von einem Garsystem mit einer Garmuffel und zumindest einem ersten Gargutträger zur wenigstens im Wesentlichen horizontalen und unmittelbaren Halterung an zumindest einer Gargutträgerhaltevorrichtung.

Es wird vorgeschlagen, dass eine Tiefenerstreckung des ersten Gargutträgers in wenigstens einem betriebsbereiten Zustand höchstens 80 % einer Tiefe der Garmuffel beträgt. Vorzugsweise beträgt die Tiefenerstreckung des ersten Gargutträgers in wenigstens einem betriebsbereiten Zustand höchstens 70 %, insbesondere maximal 60 % und besonders vorteilhaft höchstens 50 % einer Tiefe der Garmuffel. Unter einem "Gargutträger" soll insbesondere eine von einem Teil einer Teleskopeinheit oder eines Backwagens verschieden ausgebildete Einschubeinheit verstanden werden, welche dazu vorgesehen ist, in die Garmuffel eines Gargeräts, insbesondere eines Backofens, eingeschoben zu werden und Gargut aufzunehmen und/oder zu tragen, insbesondere unmittelbar und/oder in einem von einem Gargutträger verschieden ausgebildeten Gargefäß. Vorzugsweise umfasst der Gargutträger einen Garrost und/oder ein Garblech und/oder eine Fettauffangwanne. Besonders vorteilhaft ist der Gargutträger als Garrost, Garblech oder Fettauffangwanne ausgebildet. Unter "vorgesehen" soll insbesondere speziell ausgelegt und/oder ausgestattet verstanden werden. Unter einer "wenigstens im Wesentlichen horizontalen Halterung" des Gargutträgers soll in diesem Zusammenhang insbesondere eine Halterung des Gargutträgers verstanden werden, bei der ein Normalenvektor auf einer Haupterstreckungsebene des Gargutträgers höchstens um 15°, vorzugsweise maximal um 10°, vorzugsweise höchstens um 5° und besonders vorteilhaft maximal um 1 ° von einer vertikalen Richtung abweicht. Unter einer "Haupterstreckungsebene" einer Einheit soll insbesondere eine Ebene verstanden werden, die unter allen Ebenen eine größte Menge an Schnittpunkten mit Elementen der Einheit aufweist. Sollten mehrere Ebenen eine größte Menge an Schnittpunkten aufweisen, soll insbesondere eine Ebene, die zumindest ein Element der Einheit schneidet und zu allen diesen Ebenen, insbesondere zu Schnittgeraden beliebiger Paare dieser Ebenen, einen geringsten mittleren Abstand aufweist, als Haupterstreckungsebene verstanden werden. Unter einer "vertikalen Richtung" soll insbesondere eine zu einer Standebene des Gargeräts senkrechte Richtung verstanden werden.

Unter einer "Gargutträgerhaltevorrichtung" soll insbesondere eine Vorrichtung verstanden werden, die zu einer Halterung und/oder Führung des Gargutträgers innerhalb der Garmuffel des Gargeräts, insbesondere des Backofens, vorgesehen ist. Insbesondere kann die Gargutträgerhaltevorrichtung zumindest teilweise einstückig mit der Garmuffel ausgeführt sein. Insbesondere kann die Gargutträgerhaltevorrichtung als eine in einer Seitenwand der Garmuffel angeformte Auflagefläche für den Gargutträger gebildet sein. Des Weiteren kann die Gargutträgerhaltevorrichtung als eine an einem Backwagen des Backofens angeordnete Haltevorrichtung für den Gargutträger ausgebildet sein. Ferner kann die Gargutträgerhaltevorrichtung eine an der Seitenwand der Garmuffel befestigte und/oder in der Garmuffel aufgelegte Trägereinheit für den Gargutträger umfassen. Insbesondere kann die Gargutträgerhaltevorrichtung einen Teleskopauszug für den Gargutträger umfassen. Insbesondere wird der Gargutträger bei einem Einführen in die Garmuffel relativ zu wenigstens einem Teil der Gargutträgerhaltevorrichtung geführt bewegt. Insbesondere ist die Gargutträgerhaltevorrichtung von einem Gargutträger verschieden ausgebildet. Unter einer "unmittelbaren Halterung" des Gargutträgers an der Gargutträgerhaltevorrichtung soll in diesem Zusammenhang insbesondere eine Konfiguration verstanden werden, bei der die Gargutträgerhaltevorrichtung zumindest einen wesentlichen Teil einer Gewichtskraft des Gargutträgers aufnimmt und der Gargutträger die Gargutträgerhaltevorrichtung insbesondere unmittelbar berührt. Unter "zumindest einem wesentlichen Teil einer Gewichtskraft" soll insbesondere ein Bruchteil von wenigstens 70 %, insbesondere von zumindest 80 %, vorzugsweise von mindestens 90 % und besonders vorteilhaft von wenigstens 95 % verstanden werden. Vorzugsweise nimmt die Gargutträgerhaltevorrichtung die gesamte Gewichtskraft des Gargutträgers auf.

Unter einer "Tiefenerstreckung" des Gargutträgers soll insbesondere eine Erstreckung des Gargutträgers in eine zu einer Einschubrichtung des Gargutträgers in die Garmuffel zumindest weitgehend parallele Richtung verstanden werden. Unter einer "Erstreckung" einer Einheit in eine Richtung soll in diesem Zusammenhang insbesondere ein maximaler Abstand zweier Punkte einer senkrechten Projektion des Elements auf eine zu der Richtung parallelen Ebene verstanden werden. Unter einer zu einer Referenzrichtung "zumindest weitgehend parallelen Richtung" soll insbesondere eine Richtung verstanden werden, welche höchstens um 15°, insbesondere maximal um 10°, vorzugsweise höchstens um 5° und besonders vorteilhaft maximal um 1 ° von der Referenzrichtung abweicht. Unter einer "Tiefe" der Garmuffel soll hier und im Folgenden insbesondere eine Erstreckung der Garmuffel in eine zu der Einschubrichtung des Gargutträgers in die Garmuffel zumindest weitgehend parallele Richtung verstanden werden.

Durch eine solche Ausgestaltung kann eine vorteilhaft hohe Bedienflexibilität erreicht werden. Insbesondere kann ein Einsatz zweier Gargutträger auf gleicher Einschubhöhe innerhalb der Garmuffel und damit ein Garen von verschiedenem Gargut auf gleicher Einschubhöhe ermöglicht werden. Ferner kann bei Anordnung mehrerer Gargutträger übereinander auf verschiedenen Einschubhöhen eine Sichtbarkeit tieferliegender Gargutträger vorteilhaft erhöht werden. Insbesondere kann eine Bedienflexibilität bei bereits bestehenden Gargeräten, insbesondere Backöfen, vorteilhaft erhöht werden. Ferner kann ein Reinigungsaufwand vorteilhaft reduziert werden, da der Gargutträger aufgrund seiner geringeren Abmessungen verglichen mit einem herkömmlichen Gargutträger leichter gehandhabt und insbesondere in einer Geschirrspülmaschine gereinigt werden kann.

Ferner wird vorgeschlagen, dass die Tiefenerstreckung maximal einem Bruchteil der Tiefe der Garmuffel entspricht, welcher Bruchteil durch einen Kehrwert einer natürlichen Zahl größer 1 gebildet ist. Hierdurch kann ein Bedienkomfort vorteilhaft gesteigert werden, da mehrere Gargutträger gleicher Tiefenerstreckung nebeneinander auf gleicher Einschubhöhe in die Garmuffel eingebracht werden können.

Vorteilhaft umfasst das Garsystem wenigstens einen zweiten Gargutträger, welcher zumindest im Wesentlichen neben den ersten Gargutträger in die Garmuffel passt. Darunter, dass der zweite Gargutträger "zumindest im Wesentlichen neben den ersten Gargutträger in die Garmuffel passt", soll insbesondere verstanden werden, dass die beiden Gargutträger auf gleicher Einschubhöhe der Gargutträgerhaltevorrichtung in die Garmuffel einbringbar sind und dass die Garmuffel anschließend durch eine Garmuffeltür insbesondere komplett verschließbar ist. Hierdurch kann vorteilhaft eine Möglichkeit eines Einsatzes zweier Gargutträger auf gleicher Einschubhöhe innerhalb der Garmuffel bereitgestellt werden. Vorzugsweise weisen der erste Gargutträger und der zweite Gargutträger identische Tiefenerstreckungen auf, wobei vorzugsweise genau zwei Gargutträger zumindest im Wesentlichen nebeneinander in die Garmuffel passen. Unter "zumindest im Wesentlichen nebeneinander" soll in diesem Zusammenhang insbesondere auf gleicher Einschubhöhe der Gargutträgerhaltevorrichtung verstanden werden. Hierdurch können ein Bedienkomfort und eine Bedienflexibilität weiter vorteilhaft erhöht werden. So können auf einer Einschubhöhe zwei insbesondere verschiedene Gargüter gegart werden, auf zwei Einschubhöhen vier insbesondere verschiedene Gargüter und auf drei Einschubhöhen sechs insbesondere verschiedenen Gargüter.

In einer weiteren Ausgestaltung der Erfindung wird vorgeschlagen, dass der erste Gargutträger und der zweite Gargutträger jeweils mit zumindest einer Mitnahmeeinheit ausgestattet sind, welche dazu vorgesehen ist, bei einer Mitnahmekopplung jede Bewegung des ersten Gargutträgers parallel zu einer Einschubrichtung der Gargutträger in die Garmuffel zumindest im Wesentlichen auf den zweiten Gargutträger zu übertragen. Insbesondere sind die Mitnahmeeinheiten dazu vorgesehen, bei der Mitnahmekopplung eine Zugbewegung des ersten Gargutträgers auf den zweiten Gargutträger zu übertragen. Vorzugsweise sind die wenigstens zwei Gargutträger dabei zumindest im Wesentlichen nebeneinander in der Garmuffel angeordnet. Unter einer "Mitnahmeeinheit" soll in diesem Zusammenhang insbesondere eine Kopplungseinheit eines Gargutträgers verstanden werden, die dazu vorgesehen ist, bei einer Mitnahmekopplung eine Kopplung mit einem weiteren Gargutträger, insbesondere einer Kopplungseinheit des weiteren Gargutträgers, einzugehen. Vorzugsweise umfasst die Mitnahmeeinheit wenigstens ein Mitnahmeelement. Unter einem "Mitnahmeelement" soll hier und im Folgenden insbesondere ein Element einer Mitnahmeeinheit eines Gargutträgers verstanden werden, welches dazu vorgesehen ist, eine Kraft auf einen weiteren Gargutträger, insbesondere auf ein Mitnahmeelement einer Mitnahmeeinheit des weiteren Gargutträgers, zu übertragen. Vorzugsweise ist das Mitnahmeelement dazu vorgesehen, eine kraftschlüssige Verbindung, insbesondere mittels magnetischer Kräfte, und/oder eine formschlüssigen Verbindung, insbesondere mittels speziell geformter Bauteile, mit dem weiteren Gargutträger, insbesondere mit dem Mitnahmeelement der Mitnahmeeinheit des weiteren Gargutträgers, einzugehen. Insbesondere kann das Mitnahmeelement als ein Permanentmagnet ausgebildet sein. Darunter, dass die Mitnahmeeinheit dazu vorgesehen ist, bei einer Mitnahmekopplung jede Bewegung des ersten Gargutträgers parallel zu einer Einschubrichtung der Gargutträger in die Garmuffel "zumindest im Wesentlichen auf den zweiten Gargutträger zu übertragen", soll insbesondere verstanden werden, dass bei der Mitnahmekopplung beliebige Bewegungen der beiden Gargutträger, insbesondere Bewegungsrichtungen und Bewegungsgeschwindigkeiten, lediglich in Beschleunigungsphasen eines der Gargutträger oder beider Gargutträger voneinander abweichen. Hierdurch kann ein Bedienkomfort besonders vorteilhaft gesteigert werden, da ein tief in die Garmuffel eingeschobener Gargutträger bequem durch einen weniger tief und insbesondere auf gleicher Einschubhöhe angeordneten Gargutträger herausziehbar ist.

In einer bevorzugten Ausgestaltung der Erfindung wird vorgeschlagen, dass die Mitnahmeeinheiten jeweils zumindest ein erstes Mitnahmeelement und wenigstens ein zweites Mitnahmeelement umfassen, welche an gegenüberliegenden Kanten der Gargutträger, insbesondere an Kanten, deren Haupterstreckungsrichtung senkrecht zur Einschubrichtung der Gargutträger in die Garmuffel ausgerichtet sind, angeordnet sind. Vorzugsweise sind das erste Mitnahmeelement und das zweite Mitnahmeelement korrespondierend zueinander ausgebildet. Hierdurch kann eine Mitnahmekopplung unabhängig davon ermöglicht werden, welche Kante des Gargutträgers als erste in die Garmuffel eingeschoben wird.

In einer besonders bevorzugten Ausgestaltung der Erfindung wird vorgeschlagen, dass wenigstens eines der Mitnahmeelemente als Mitnahmehaken ausgebildet ist. Unter einem "Mitnahmehaken" soll insbesondere ein hakenartiges Bauelement verstanden werden, welches insbesondere dazu vorgesehen ist, bei einer Mitnahmekopplung ein weiteres Bauelement zu hintergreifen und/oder in eine Ausnehmung einzugreifen. Insbesondere kann das andere Mitnahmeelement der Mitnahmeeinheit als eine Ausnehmung ausgebildet sein. Insbesondere können auch beide Mitnahmeelemente der Mitnahmeeinheit als Mitnahmehaken ausgebildet sein. Hierdurch kann ein konstruktiv einfaches und vorteilhaft zuverlässiges Mitnahmeelement bereitgestellt werden.

Wenn bei einer Mitnahmekopplung wenigstens ein erstes Mitnahmeelement des zweiten Gargutträgers an zumindest ein zweites Mitnahmeelement des ersten Gargutträgers koppelt, kann eine besonders vorteilhafte und zuverlässige Mitnahmekopplung erzielt werden.

Ferner werden ein Gargutträger eines erfindungsgemäßen Garsystems und ein Gargerät, insbesondere ein Backofen, mit einem erfindungsgemäßen Garsystem vorgeschlagen. Hierdurch können ein Gargutträger und ein Gargerät, insbesondere ein Backofen, bereitgestellt werden, welche eine hohe Bedienflexibilität ermöglichen.

Des Weiteren wird ein Garverfahren vorgeschlagen mit einem Garsystem mit einer Garmuffel und zumindest einem ersten Gargutträger zur wenigstens im Wesentlichen horizontalen und unmittelbaren Halterung an zumindest einer Gargutträgerhaltevorrichtung, bei dem ein erster Gargutträger mit einer Tiefenerstreckung von höchstens 80 % einer Tiefe der Garmuffel verwendet wird. Hierdurch kann eine vorteilhaft hohe Bedienflexibilität erreicht werden.

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Gargerät mit einem erfindungsgemäßen Garsystem mit einer Garmuffel und einem ersten sowie einem zweiten, jeweils als Garblech ausgebildeten Gargutträger in einer isometrischen Darstellung,
- Fig. 2: das Garsystem aus Fig. 1 in einer Seitenansicht bei entfernter Garmuffelseitenwand,
- Fig. 3: das Garsystem mit einem auf den ersten Gargutträger aufgesetzten Aufsatzgargutträger,
- Fig. 4: ein weiteres Garsystem mit einer Garmuffel und einem als ein Garrost ausgebildeten ersten Gargutträger und einem als ein Garblech ausgebildeten zweiten Gargutträger in einer isometrischen Darstellung,
- Fig. 5: eine weiteres Garsystem mit einer Garmuffel und zwei, jeweils eine Mitnahmeeinheit aufweisenden Gargutträgern in einer seitlichen Schnittdarstellung,
- Fig. 6: die zwei Gargutträger des Garsystems aus Fig. 5 in einer Draufsicht und
- Fig. 7: zwei Gargutträger mit Mitnahmeeinheiten eines weiteren alternativen Garsystems in einer Draufsicht.

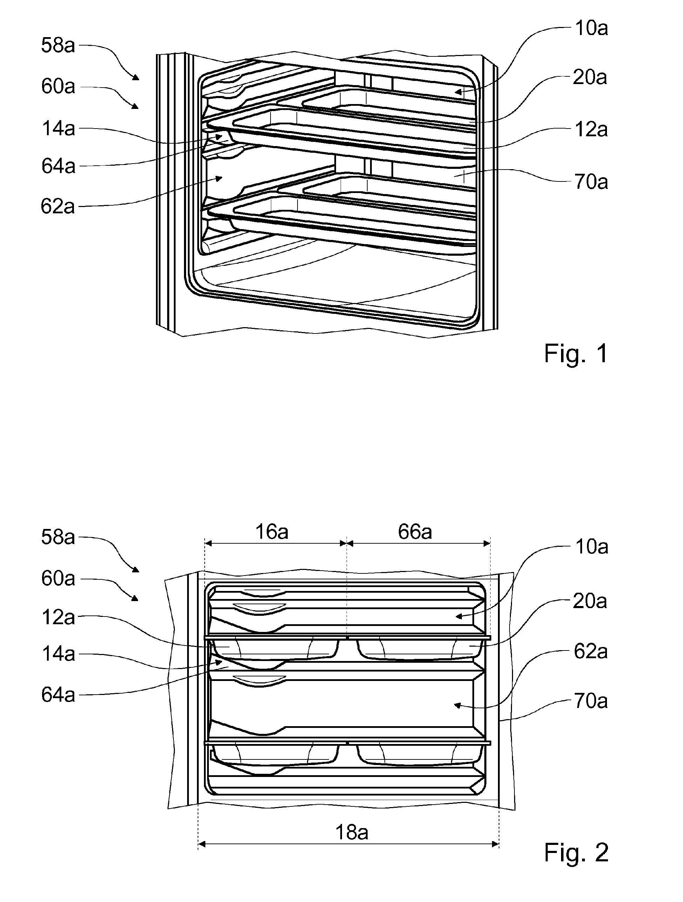

Figur 1 zeigt ein als ein Backofen 60a ausgebildetes Gargerät 58a mit einem erfindungsgemäßen Garsystem in einer isometrischen Darstellung. Das Garsystem umfasst eine Garmuffel 10a, einen ersten Gargutträger 12a und eine Gargutträgerhaltevorrichtung 14a. Der erste Gargutträger 12a ist als ein Garblech ausgebildet. Die Gargutträgerhaltevorrichtung 14a weist in gegenüberliegenden Garmuffelseitenwänden 62a angeformte Halteschienen 64a auf, von denen in Fig. 1 lediglich eine bezeichnet ist. Der erste Gargutträger 12a ist dazu vorgesehen, unmittelbar auf die Halteschienen 64a platziert zu werden. Der erste Gargutträger 12a weist eine Tiefenerstreckung 16a auf, welche höchstens 50 % einer Tiefe 18a der Garmuffel 10a entspricht (vgl. Fig. 2).

Figur 2 zeigt das Garsystem in einer Seitenansicht, wobei eine der Garmuffelseitenwände 62a zur Verdeutlichung entfernt wurde. Das Garsystem umfasst einen zweiten Gargutträger 20a. Der zweite Gargutträger 20a ist als ein Garblech ausgebildet. Der zweite Gargutträger 20a weist eine Tiefenerstreckung 66a auf, welche der Tiefenerstreckung 16a des ersten Gargutträgers 12a entspricht. Somit passt der zweite Gargutträger 20a auf derselben Halteschiene 64a neben den ersten Gargutträger 12a in die Garmuffel 10a. Hierdurch können zwei unterschiedliche Gargüter auf verschiedenen Gargutträgern 12a, 20a auf gleicher Höhe innerhalb der Garmuffel 10a gegart werden.

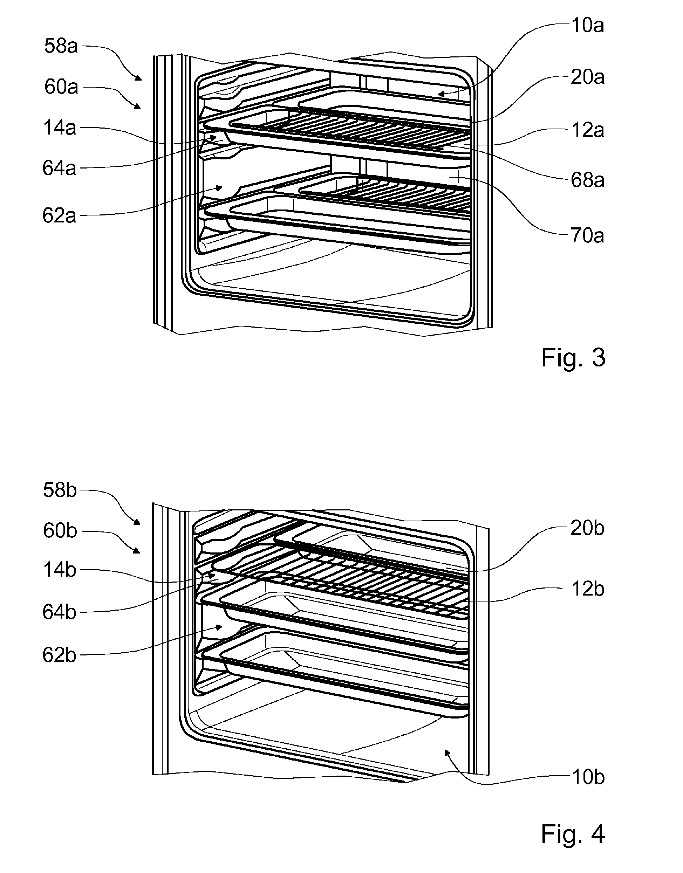

Figur 3 zeigt eine weitere Anwendung des Garsystems in einer isometrischen Darstellung. Das Garsystem umfasst einen Aufsatzgargutträger 68a, welcher auf die Gargutträger 12a, 20a aufsetzbar ist. Im vorliegenden Fall ist der Aufsatzgargutträger 68a auf den ersten Gargutträger 12a aufgesetzt. Der Aufsatzgargutträger 68a ist als ein Aufsatzgarrost ausgebildet. Der Aufsatzgargutträger 68a kann beispielsweise beim Garen von Fleisch zum Einsatz kommen, wobei der Aufsatzgargutträger 68a das zu garende Fleisch trägt und der erste Gargutträger 12a als Fettfangwanne eingesetzt wird.

In Fig. 4 bis 7 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Fig. 1 bis 3, verwiesen werden kann. Zur Unterscheidung der Ausführungsbeispiele ist der Buchstabe a in den Bezugszeichen des Ausführungsbeispiels in Fig. 1 bis 3 durch die Buchstaben b, c und d in den Bezugszeichen der Ausführungsbeispiele der Fig. 4 bis 7 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Fig. 1 bis 3, verwiesen werden.

Figur 4 zeigt ein weiteres Garsystem mit einer Garmuffel 10b, einem ersten Gargutträger 12b und einem zweiten Gargutträger 20b in einer isometrischen Darstellung. Der erste Gargutträger 12b ist als Garrost ausgebildet. Der zweite Gargutträger 20b ist als Garblech ausgebildet. Der erste Gargutträger 12b weist eine Tiefenerstreckung 16b auf, welche einer Tiefenerstreckung 66b des zweiten Gargutträgers 20b entspricht. Die Tiefenerstreckung 16b, 66b der Gargutträger 12b, 20b beträgt jeweils höchstens 50 % einer Tiefe 18b der Garmuffel 10b. Somit passt der erste Gargutträger 12b auf derselben Halteschiene 64b neben den zweiten Gargutträger 12b in die Garmuffel 10b.

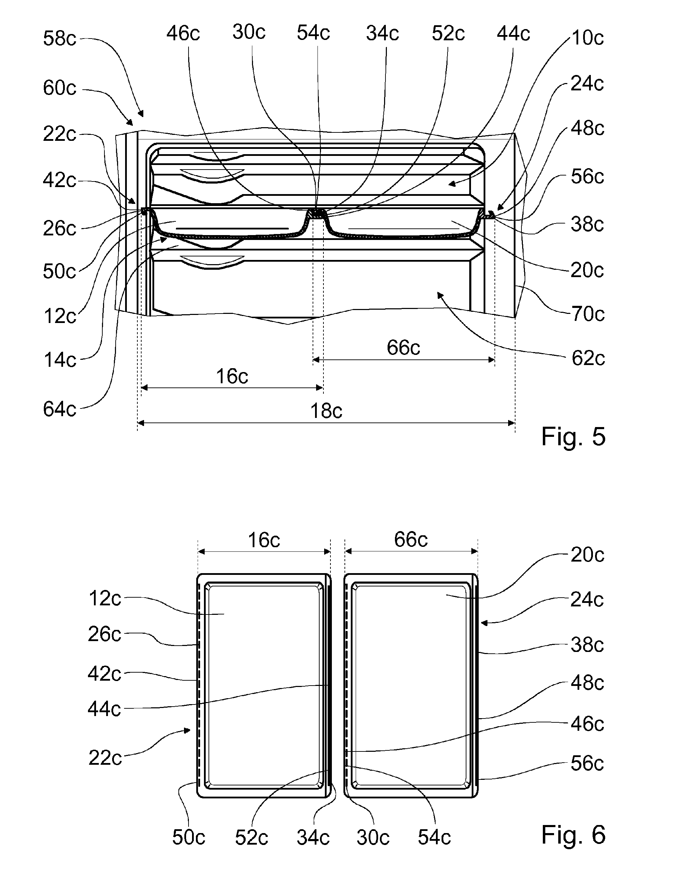

Figur 5 zeigt ein weiteres Garsystem mit einer Garmuffel 10c, einem ersten Gargutträger 12c und einem zweiten Gargutträger 20c in einer seitliche Schnittdarstellung. Der erste Gargutträger 12c ist als ein Garblech ausgebildet. Der zweite Gargutträger 20c ist als ein Garblech ausgebildet. Der erste Gargutträger 12c weist eine Tiefenerstreckung 16c auf, welche einer Tiefenerstreckung 66c des zweiten Gargutträgers 20c entspricht. Die Tiefenerstreckung 16c, 66c der Gargutträger 12c, 20c beträgt jeweils höchstens 50 % einer Tiefe 18c der Garmuffel 10c. Somit passt der erste Gargutträger 12c auf derselben Halteschiene 64c neben den zweiten Gargutträger 12c in die Garmuffel 10c. Der erste Gargutträger 12c und der zweite Gargutträger 20c sind jeweils mit einer Mitnahmeeinheit 22c, 24c ausgestattet, welche dazu vorgesehen ist, bei einer Mitnahmekopplung jede Bewegung des ersten Gargutträgers 12c parallel zu einer Einschubrichtung der Gargutträger 12c, 20c in die Garmuffel 10c zumindest im Wesentlichen auf den zweiten Gargutträger 20c zu übertragen.

Figur 6 zeigt den ersten Gargutträger 12c und den zweiten Gargutträger 20c nebeneinander bei nicht hergestellter Mitnahmekopplung in einer Draufsicht. Die Mitnahmeeinheiten 22c, 24c umfassen jeweils ein erstes Mitnahmeelement 26c, 30c und jeweils ein zweites Mitnahmeelement 34c, 38c, welche an gegenüberliegenden Kanten 42c, 44c, 46c, 48c der Gargutträger 12c, 20c angeordnet sind. Die Mitnahmeelemente 26c, 30c, 34c, 38c sind als Mitnahmehaken 50c, 52c, 54c, 56c ausgebildet (vgl. Fig. 5). Das erste Mitnahmeelement 26c des ersten Gargutträgers 12c ist als ein in einem betriebsbereiten Zustand nach unten gerichteter Mitnahmehaken 50c ausgebildet. Das zweite Mitnahmeelement 34c des ersten Gargutträgers 12c ist als ein in einem betriebsbereiten Zustand nach oben gerichteter Mitnahmehaken 52c ausgebildet. Das erste Mitnahmeelement 30c des zweiten Gargutträgers 20c ist als ein in einem betriebsbereiten Zustand nach unten gerichteter Mitnahmehaken 54c ausgebildet. Das zweite Mitnahmeelement 38c des zweiten Gargutträgers 20c ist als ein in einem betriebsbereiten Zustand nach oben gerichteter Mitnahmehaken 56c ausgebildet. Bei der Mitnahmekopplung koppelt das erste Mitnahmeelement 30c des zweiten Gargutträgers 20c an das zweite Mitnahmeelement 34c des ersten Gargutträgers 12c. Umgekehrt kann auch das erste Mitnahmeelement 26c des ersten Gargutträgers 12c an das zweite Mitnahmeelement 38c des zweiten Gargutträgers 20c koppeln (nicht dargestellt). Durch eine abgeschrägte Formgebung der Mitnahmehaken 50c, 52c, 54c, 56c wird beim Einschieben des ersten Gargutträgers 12c auf der Halteschiene 64c in Richtung des zweiten Gargutträgers 20c die Mitnahmekopplung dadurch hergestellt, dass bei Anschlag des ersten Gargutträgers 12c an den zweiten Gargutträger 20c und des zweiten Gargutträgers 20c an eine Rückwand 70c der Garmuffel 10c der zweite Gargutträger 20c leicht angehoben wird, woraufhin das erste Mitnahmeelement 30c des zweiten Gargutträgers 20c in das zweite Mitnahmeelement 34c des ersten Gargutträgers 12c eingreift (nicht dargestellt).

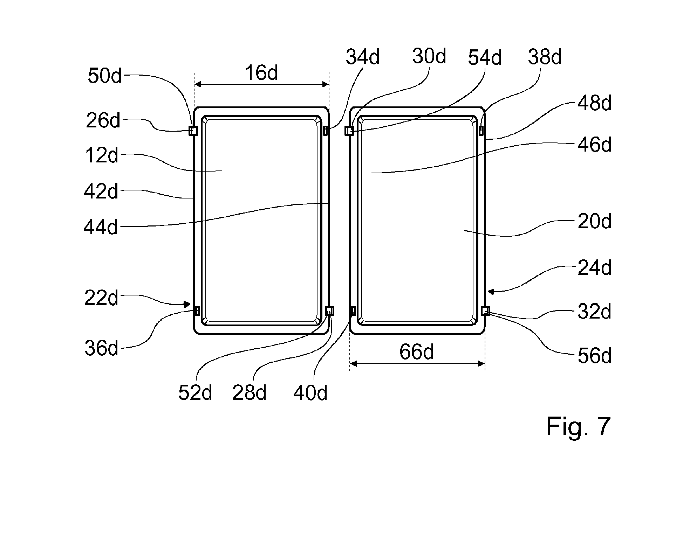

Figur 7 zeigt nebeneinander einen ersten Gargutträger 12d und einen zweiten Gargutträger 20d eines weiteren Garsystems bei nicht hergestellter Mitnahmekopplung in einer Draufsicht. Die Gargutträger 12d, 20d sind wiederum als Garbleche ausgebildet. Die Gargutträger 12d, 20d umfassen jeweils eine Mitnahmeeinheit 22d, 24d. Die Mitnahmeeinheiten 22d, 24d weisen jeweils zwei erste Mitnahmeelemente 26d, 28d, 30d, 32d und jeweils zwei zweite Mitnahmeelemente 34d, 36d, 38d, 40d auf. Das erste Mitnahmeelement 26d und das zweite Mitnahmeelement 36d sind an gegenüberliegenden Enden einer Kante 42d des ersten Gargutträgers 12d angeordnet. Das erste Mitnahmeelement 28d und das zweite Mitnahmeelement 34d sind an gegenüberliegenden Enden einer der Kante 44d gegenüberliegenden Kante 42d des ersten Gargutträgers 12d angeordnet. Das erste Mitnahmeelement 30d und das zweite Mitnahmeelement 40d sind an gegenüberliegenden Enden einer Kante 46d des zweiten Gargutträgers 20d angeordnet. Das erste Mitnahmeelement 32d und das zweite Mitnahmeelement 38d sind an gegenüberliegenden Enden einer der Kante 46d gegenüberliegenden Kante 48d des zweiten Gargutträgers 20d angeordnet. Gegenüberliegend vom ersten Mitnahmeelement 26d an der Kante 42d ist das zweite Mitnahmeelement 34d an einer Kante 44d angeordnet. Gegenüberliegend vom ersten Mitnahmeelement 28d an der Kante 44d ist das zweite Mitnahmeelement 36d an der Kante 42d angeordnet. Gegenüberliegend vom ersten Mitnahmeelement 30d an der Kante 46d ist das zweite Mitnahmeelement 38d an der Kante 48d angeordnet. Gegenüberliegend vom ersten Mitnahmeelement 32d an der Kante 48d ist das zweite Mitnahmeelement 40d an der Kante 46d angeordnet.

Die ersten Mitnahmeelemente 26d, 28d, 30d, 32d sind als Mitnahmehaken 50d, 52d, 54d, 56d ausgebildet. Die Mitnahmehaken 50d, 52d, 54d, 56d sind als in einem betriebsbereiten Zustand nach unten greifend ausgebildet (in Fig. 7 in die Zeichenebene hinein gerichtet). Die zweiten Mitnahmeelemente 34d, 36d, 38d, 40d sind als Ausnehmungen ausgebildet. Die Mitnahmehaken 50d, 52d, 54d, 56d sind dazu vorgesehen, bei einer Mitnahmekopplung in die Ausnehmungen einzugreifen. Bei der Mitnahmekopplung koppelt das erste Mitnahmeelement 30d des zweiten Gargutträgers 20d an das zweite Mitnahmeelement 34d des ersten Gargutträgers 12d. Ferner koppelt das erste Mitnahmeelement 28d des ersten Gargutträgers 12d an das zweite Mitnahmeelement 40d des zweiten Gargutträgers 20d. Umgekehrt können auch das erste Mitnahmeelement 26d des ersten Gargutträgers 12d an das zweite Mitnahmeelement 38d des zweiten Gargutträgers 20d und das erste Mitnahmeelement 32d des zweiten Gargutträgers 20d an das zweite Mitnahmeelement 36d des ersten Gargutträgers 12d koppeln (nicht dargestellt). Des Weiteren ist denkbar, dass der erste Gargutträger 12d und der zweite Gargutträger 20d relativ zueinander verdreht werden, so dass beispielsweise das erste Mitnahmeelement 32d des zweiten Gargutträgers 20d an das zweite Mitnahmeelement 34d und das erste Mitnahmeelement 28d des ersten Gargutträgers 12d an das zweite Mitnahmeelement 38d des zweiten Gargutträgers 20d koppeln (ebenfalls nicht dargestellt). Durch eine abgeschrägte Formgebung der Mitnahmehaken 50d, 52d, 54d, 56d wird beim Einschieben des ersten Gargutträgers 12d auf einer Halteschiene 64d in Richtung des zweiten Gargutträgers 20d die Mitnahmekopplung dadurch hergestellt, dass bei Anschlag des ersten Gargutträgers 12d an den zweiten Gargutträger 20d und des zweiten Gargutträgers 20d an eine Rückwand 70d einer Garmuffel 10d die Gargutträger 12d, 20d leicht gegeneinander um eine Einschubrichtung der Gargutträger 12d, 20d in die Garmufffel 10d verdreht werden, woraufhin das erste Mitnahmeelement 30d des zweiten Gargutträgers 20d in das zweite Mitnahmeelement 34d des ersten Gargutträgers 12d und das erste Mitnahmeelement 28d des ersten Gargutträgers 12d in das zweite Mitnahmeelement 40d des zweiten Gargutträgers 20d eingreift (nicht dargestellt).

Ein entscheidender Vorteil der Ausgestaltung gemäß Fig. 7 gegenüber der Ausgestaltung gemäß Fig. 5 und 6 ist die Tatsache, dass die Gargutträger 12d, 20d in beliebiger Reihenfolge und mit beliebiger Kante 42d, 44d, 46d, 48d voran in eine Garmuffel 10d einschiebbar sind und dennoch immer eine Mitnahmekopplung herstellbar ist. Bei der Ausgestaltung gemäß Fig. 5 und 6 sind die Gargutträger 12c, 20c zur Herstellung einer Mitnahmekopplung zueinander korrespondierend in die Garmuffel 10c einzuschieben.

In alternativen Ausgestaltungen können Mitnahmeeinheiten aufweisende Gargutträger auch als Garroste ausgebildet sein. So ist insbesondere sowohl eine Mitnahmekopplung eines ersten Garrosts an einen zweiten Garrost sowie eine Mitnahmekopplung eines Garrosts an ein Garblech denkbar.

### Bezugszeichen

- 10: Garmuffel
- 12: Erster Gargutträger
- 14: Gargutträgerhaltevorrichtung
- 16: Tiefenerstreckung
- 18: Tiefe
- 20: Zweiter Gargutträger
- 22: Mitnahmeeinheit
- 24: Mitnahmeeinheit
- 26: Erstes Mitnahmeelement
- 28: Erstes Mitnahmeelement
- 30: Erstes Mitnahmeelement
- 32: Erstes Mitnahmeelement
- 34: Zweites Mitnahmeelement
- 36: Zweites Mitnahmeelement
- 38: Zweites Mitnahmeelement
- 40: Zweites Mitnahmeelement
- 42: Kante
- 44: Kante
- 46: Kante
- 48: Kante
- 50: Mitnahmehaken
- 52: Mitnahmehaken
- 54: Mitnahmehaken
- 56: Mitnahmehaken
- 58: Gargerät
- 60: Backofen
- 62: Garmuffelseitenwand
- 64: Halteschiene
- 66: Tiefenerstreckung
- 68: Aufsatzgargutträger
- 70: Rückwand

## Patentansprüche

1. Garsystem mit einer Garmuffel (10a-d) und zumindest einem ersten Gargutträger (12-d) zur wenigstens im Wesentlichen horizontalen und unmittelbaren Halterung an zumindest einer Gargutträgerhaltevorrichtung (14a-d), **dadurch gekennzeichnet, dass** eine Tiefenerstreckung (16a-d) des ersten Gargutträgers (12a-d) in wenigstens einem betriebsbereiten Zustand höchstens 80 % einer Tiefe (18a-d) der Garmuffel (10a-d) beträgt.

2. Garsystem nach Anspruch 1, **dadurch gekennzeichnet, dass** die Tiefenerstreckung (16a-d) maximal einem Bruchteil der Tiefe (18a-d) der Garmuffel (10a-d) entspricht, welcher Bruchteil durch einen Kehrwert einer natürlichen Zahl größer 1 gebildet ist.

3. Garsystem nach Anspruch 1 oder 2, **gekennzeichnet durch** wenigstens einen zweiten Gargutträger (20a-d), welcher zumindest im Wesentlichen neben den ersten Gargutträger (12a-d) in die Garmuffel (10a-d) passt.

4. Garsystem zumindest nach Anspruch 3, **dadurch gekennzeichnet, dass** der erste Gargutträger (12c; 12d) und der zweite Gargutträger (20c; 20d) jeweils mit zumindest einer Mitnahmeeinheit (22c, 24c; 22d, 24d) ausgestattet sind, welche dazu vorgesehen ist, bei einer Mitnahmekopplung jede Bewegung des ersten Gargutträgers (12c; 12d) parallel zu einer Einschubrichtung der Gargutträger (12c, 20c; 12d, 20d) in die Garmuffel (10c; 10d) zumindest im Wesentlichen auf den zweiten Gargutträger (20c; 20d) zu übertragen.

5. Garsystem zumindest nach Anspruch 4, **dadurch gekennzeichnet, dass** die Mitnahmeeinheiten (22c, 24c; 22d, 24d) jeweils zumindest ein erstes Mitnahmeelement (26c, 30c; 26d, 28d, 30d, 32d) und wenigstens ein zweites Mitnahmeelement (34c, 38c; 34d, 36d, 38d, 40d) umfassen, welche an gegenüberliegenden Kanten (42c, 44c, 46c, 48c; 42d, 44d, 46d, 48d) der Gargutträger (12c, 20c; 12d, 20d) angeordnet sind.

6. Garsystem zumindest nach Anspruch 5, **dadurch gekennzeichnet, dass** wenigstens eines der Mitnahmeelemente (26c, 30c, 34c, 38c; 26d, 28d, 30d, 32d) als Mitnahmehaken (50c, 52c, 54c, 56c; 50d, 52d, 54d, 56d) ausgebildet ist.

7. Garsystem zumindest nach Anspruch 5 oder 6, **dadurch gekennzeichnet, dass** bei einer Mitnahmekopplung wenigstens ein erstes Mitnahmeelement (30c; 30d) des zweiten Gargutträgers (20c; 20d) an zumindest ein zweites Mitnahmeelement (34c; 34d) des ersten Gargutträgers (12c, 12d) koppelt.

8. Gargutträger (12a-d) eines Garsystems nach einem der vorhergehenden Ansprüche.

9. Gargerät (58a-d), insbesondere Backofen (60a-d), mit einem Garsystem nach einem der Ansprüche 1 bis 7.

10. Garverfahren mit einem Garsystem mit einer Garmuffel (10a-d) und zumindest einem ersten Gargutträger (12a-d) zur wenigstens im Wesentlichen horizontalen und unmittelbaren Halterung an zumindest einer Gargutträgerhaltevorrichtung (14a-d), insbesondere nach einem der Ansprüche 1 bis 7, **dadurch gekennzeichnet, dass** ein erster Gargutträger (12a-d) mit einer Tiefenerstreckung (16a-d) von höchstens 80 % einer Tiefe (18a-d) der Garmuffel (10a-d) verwendet wird.
